# EUROPEAN PATENT APPLICATION

(11) **EP 2 270 792 A1**
(43) Date of publication of application: **05.01.2011**
(21) Application number: 09170137.5
(22) Date of filing: 11.09.2009
(51) Int. Cl.: G11B 23/00, G11B 7/26

(54) **Storing media with undifferentiated visual aspect**

(30) Priority: 01.07.2009 IN CH15642009
(71) Applicant: Moser Baer India Ltd., Nungambakkam Chennai (IN)
(72) Inventor: Juneja, G. S., 00, Chennai (IN); Raman, Rajagopal S., 00, Chennai (IN); Jindal, Rajeev, 00, Chennai (IN); Bhargava, Anil, 00, Chennai (IN)
(74) Representative: Roche, Dermot

(57) **Abstract**

A storing medium with undifferentiated visual aspect, and a method and system for manufacturing the storing medium are provided. The storing medium includes a base substrate (602) and a print substrate (612) onto which one or more labels can be printed. The base substrate (602) includes a first region (202) formed between a first inner periphery (206) and a first outer periphery (208), and a second region (204) formed between a second inner periphery (210) and a second outer periphery (212). One or more first tracks are formed in the first region (202), and one or more second tracks are formed up to a pre-defined periphery (214) from the second outer periphery (212) in the second region (204). The pre-defined periphery (214) substantially lies at the second inner periphery (210) or between the second inner periphery (210) and the second outer periphery (212). The first tracks have a first set of undulations formed thereon, and the second tracks have a second set of undulations formed thereon. The base substrate (602) appears substantially visually undifferentiated across a region spanning up to the pre-defined periphery (214) from the first outer periphery (208).

## Description

### RELATED APPLICATIONS

This application claims priority under Indian Patent Application No. 1564/CHE/2009 filed July 1, 2009, titled 'Storing Media with Undifferentiated Visual Aspect', which is incorporated herein in its entirety by reference.

### BACKGROUND

The present invention relates, in general, to storing media. More particularly, the present invention relates to a storing medium with undifferentiated visual aspect.

A storing medium typically has a plurality of regions. Some of these regions may be used to store information. Such regions are hereinafter referred to as 'information-storing regions'. On the other hand, at least one region may form a portion with which devices may hold the storing medium. Such a region is hereinafter referred to as a 'holding region'. In various types of storing media, holding regions generally appear different from information-storing regions. In most cases, holding regions are generally transparent, while information-storing regions are opaque.

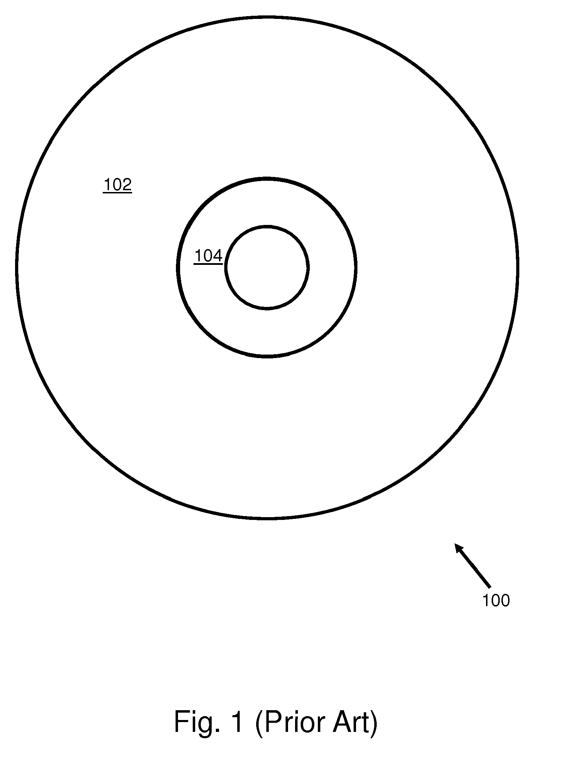

FIG. 1 (Prior Art) illustrates a storing medium 100. Storing medium 100 includes a holding region 102 and an information-storing region 104. With reference to FIG. 1, holding region 102 is transparent, while information-storing region 104 is opaque. Therefore, holding region 102 appears substantially different from information-storing region 104. Consider, for example, that storing medium 100 has a print substrate attached on its surface, such that the print substrate spans holding region 102 and information-storing region 104. When a label is printed onto this print substrate, the label appears substantially varying across holding region 102 and information-storing region 104. This affects the visual aspect of storing medium 100, making it unappealing to customers.

In light of the foregoing discussion, there is a need for a storing medium that has an undifferentiated visual aspect, and is visually appealing.

### SUMMARY

An object of the present invention is to provide a storing medium with undifferentiated visual aspect (and manufacturing method and system thereof).

Another object of the present invention is to provide a storing medium that is visually appealing.

Embodiments of the present invention provide a storing medium with undifferentiated visual aspect. The storing medium includes a base substrate and a print substrate onto which one or more labels can be printed. The base substrate includes a first region formed between a first inner periphery and a first outer periphery, and a second region formed between a second inner periphery and a second outer periphery. The second inner periphery is smaller than the first inner periphery, and the second outer periphery is smaller than the first outer periphery. In an embodiment of the present invention, the second outer periphery substantially overlaps the first inner periphery.

The first region is capable of storing information, and includes one or more first tracks capable of tracking a light beam. The first tracks have a first set of undulations formed thereon. The second region includes one or more second tracks capable of tracking a light beam. The second tracks are formed up to a pre-defined periphery from the second outer periphery, where the pre-defined periphery substantially lies at the second inner periphery or between the second inner periphery and the second outer periphery. The second tracks have a second set of undulations formed thereon. The base substrate appears substantially visually undifferentiated across a region spanning up to the pre-defined periphery from the first outer periphery.

The print substrate is attached to the base substrate. A label printed onto the print substrate appears substantially visually undifferentiated across the first region and the second region, due to formation of the first tracks and the second tracks up to the pre-defined periphery from the first outer periphery.

In accordance with an embodiment of the present invention, the first tracks are substantially similar to the second tracks.

In accordance with an embodiment of the present invention, the first set of undulations is substantially similar to the second set of undulations. In accordance with another embodiment of the present invention, the first set of undulations is different from the second set of undulations.

As mentioned above, the storing medium so manufactured appears substantially visually undifferentiated across the region spanning up to the pre-defined periphery from the first outer periphery. Moreover, a label printed onto the storing medium appears substantially visually undifferentiated across the first region and the second region. This provides the storing medium an undifferentiated visual aspect, and makes it visually appealing.

### BRIEF DESCRIPTION OF DRAWINGS

Embodiments of the present invention will hereinafter be described in conjunction with the appended drawings provided to illustrate and not to limit the scope of the claims, wherein like designations denote like elements, and in which:
FIG. 1 (Prior Art) illustrates a storing medium;
FIG. 2 illustrates a circular storing medium, in accordance with an embodiment of the present invention;
FIG. 3 illustrates a circular storing medium, in accordance with another embodiment of the present invention;
FIG. 4 illustrates a square-shaped storing medium, in accordance with an embodiment of the present invention;
FIG. 5 illustrates a square-shaped storing medium, in accordance with another embodiment of the present invention;
FIG. 6 illustrates various layers of a storing medium, in accordance with an embodiment of the present invention;
FIG. 7 is a sectional view illustrating the various layers of the storing medium, in accordance with an embodiment of the present invention;
FIG. 8 illustrates a system for manufacturing a storing medium, in accordance with an embodiment of the present invention; and
FIG. 9 illustrates a method of manufacturing a storing medium, in accordance with an embodiment of the present invention.

### DETAILED DESCIPTION

As used in the specification and claims, the singular forms "a", "an" and "the" include plural references unless the context clearly dictates otherwise. For example, the term "a storing medium" may include a plurality of storing media unless the context clearly dictates otherwise. A term having "-containing" such as "metal-containing" contains a metal but is open to other substances, but need not contain any other substance other than a metal.

Embodiments of the present invention provide a storing medium with undifferentiated visual aspect, and a method and system for manufacturing the storing medium. In the description of the embodiments of the present invention, numerous specific details are provided, such as examples of components and/or mechanisms, to provide a thorough understanding of embodiments of the present invention. One skilled in the relevant art will recognize, however, that an embodiment of the present invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

### GLOSSARY

Storing medium: A storing medium is for storing information.

Base substrate: A base substrate is for providing support to the storing medium.

First region: A first region is a two-dimensional region, formed between a first inner periphery and a first outer periphery, on which information is stored. The first region can also be referred to as the data area.

Second region: A second region is a two-dimensional region, formed between a second inner periphery and a second outer periphery, adjacent to the first region. The second region can also be referred to as the hub area.

Tracks: A track is a three-dimensional recessed region formed on the base substrate. Tracks may also be referred to as grooves.

Undulations: An undulation is a continuous wave formed on the tracks. The undulations may also be referred to as wobbles. Tracks with undulations may be referred to as wobbled grooves.

Print Substrate: A print substrate is a substrate onto which one or more labels can be printed. The print substrate may also be referred to as a printed material.

Visually undifferentiated: A region is visually undifferentiated when it has substantially the same intensity of whiteness across the region. The intensity of whiteness may, for example, be measured in terms of the Lab color space.

Lab color space: The Lab color space is a color-opponent space in which component 'L' represents lightness of color, component 'a' represents its position between red/magenta and green, and component 'b' represents its position between yellow and blue. The Lab color space is designed to approximate human vision. Its component 'L' closely matches human perception of lightness.

Stamping module: A stamping module is for stamping the base substrate.

Stamp: A stamp is designed to form tracks with or without undulations over the base substrate, as required.

Attaching module: An attaching module is for attaching the print substrate to the base substrate.

Information-storing layer: An information-storing layer is for storing information onto it. The information-storing layer is formed over the tracks on the base substrate.

Shiny coat: A shiny coat is formed over the information-storing layer. A light beam falling on the storing medium is reflected off the shiny coat, and is received by a light detector.

Protecting coat: A protecting coat is formed over the shiny coat. The protecting coat protects the storing medium from external factors, such as scratches and dirt.

Layering module: A layering module is for forming one or more information-storing layers over the tracks.

Shine-coating module: A shine-coating module is for coating a shiny coat over the information-storing layers.

Protection-coating module: A protection-coating module is for coating a protecting coat over the shiny coat.

The storing medium includes a base substrate and a print substrate onto which one or more labels can be printed. The base substrate includes a first region and a second region. The first region is formed between a first inner periphery and a first outer periphery, while the second region is formed between a second inner periphery and a second outer periphery. The second inner periphery is smaller than the first inner periphery, and the second outer periphery is smaller than the first outer periphery. In an embodiment of the present invention, the second outer periphery substantially overlaps the first inner periphery.

The first region is capable of storing information, and includes one or more first tracks capable of tracking a light beam. The first tracks have a first set of undulations formed thereon. The second region includes one or more second tracks capable of tracking a light beam. The second tracks are formed up to a pre-defined periphery from the second outer periphery. The pre-defined periphery substantially lies at the second inner periphery or between the second inner periphery and the second outer periphery. The first inner periphery, the first outer periphery, the second inner periphery, the second outer periphery and the pre-defined periphery are hereinafter referred to as the peripheries. The second tracks have a second set of undulations formed thereon.

The base substrate appears substantially visually undifferentiated across a region spanning up to the pre-defined periphery from the first outer periphery, in accordance with an embodiment of the present invention.

The print substrate is attached to the base substrate. A label printed onto the print substrate appears substantially visually undifferentiated across the first region and the second region, due to formation of the first tracks and the second tracks up to the pre-defined periphery from the first outer periphery. The print substrate may, for example, be made of paper, plastic, polyvinyl pyrrolidone (PVP), polyvinyl alcohol (PVOH), polyvinyl acetate (PVA), polymers, synthetic resins, or combinations thereof.

It should be noted here that the base substrate appears substantially visually undifferentiated when seen through a naked eye or an optical device. This holds true even when one or more labels are printed onto the print substrate. As mentioned above, a region is visually undifferentiated when it has substantially the same intensity of whiteness across the region. The intensity of whiteness may, for example, be measured in terms of the Lab color space, using a modified form of spectrophotometer. An example of such a spectrophotometer is the Gretag-Macbeth spectroscan.

In addition, the base substrate may include one or more information-storing layers formed over the first tracks and the second tracks, a shiny coat formed over the information-storing layers, and a protecting coat formed over the shiny coat. The information-storing layers enable storing of information on the storing medium. The information-storing layers may, for example, be made of cyanine, phthalocyanine, azo compounds, formazan, metals, metal-containing compounds, or combinations thereof. The shiny coat shines off a light beam falling on the storing medium, and therefore, aids in tracking of the light beam. The shiny coat may, for example, be made of metals, metallic alloys, metal-containing compounds, or combinations thereof. The protecting coat protects the storing medium from external factors, such as scratches or dirt. The protecting coat may, for example, be made of a lacquer or a resin.

Storing media may be of any desired type, shape and size. Examples of storing media include, but are not limited to, Compact Discs (CDs), Digital Versatile Discs (DVDs), High-Definition DVDs (HD-DVDs), High-Definition Versatile Discs (HVDs), Blu-ray Discs (BDs), MiniDiscs (MDs), Universal Media Discs (UMDs), and Laser Discs (LDs). Accordingly, the peripheries may be of any desired shape and size. In one example, the peripheries may be circular in shape, and may be in the form of concentric circles arranged one within another. In another example, the peripheries may be square in shape, and may be in the form of squares arranged one within another. In yet another example, the peripheries may have different shapes.

In accordance with an embodiment of the present invention, the first tracks are substantially similar to the second tracks. In such a case, the second tracks in the second region are a continuation of the first tracks in the first region.

In accordance with an embodiment of the present invention, the first set of undulations is substantially similar to the second set of undulations. In such a case, the first set of undulations and the second set of modulations are modulated by the same modulation technique. In accordance with another embodiment of the present invention, the first set of undulations is different from the second set of undulations. In such a case, the first set of undulations and the second set of modulations are modulated by different modulation techniques. Examples of modulation techniques are, but not limited to, a Quadrature Phase Shift Keying (QPSK) modulation, a frequency modulation, an amplitude modulation, a Modified Amplitude Modulation (MAM), a phase modulation, a Minimum Shift Keying (MSK) modulation, and a Saw Tooth Wobble (STW) modulation.

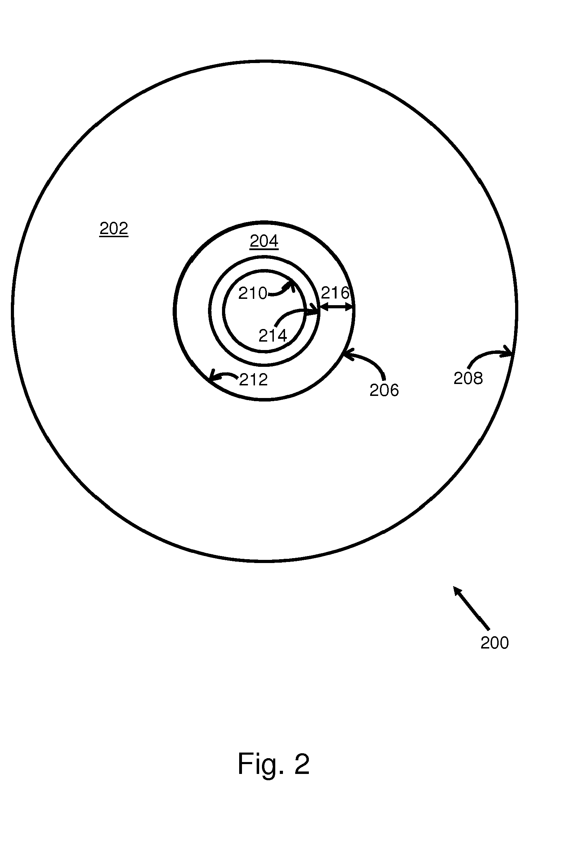

FIG. 2 illustrates a storing medium 200, in accordance with an embodiment of the present invention. With reference to FIG. 2, storing medium 200 is circular in shape. Storing medium 200 includes a base substrate and a print substrate onto which one or more labels can be printed. The base substrate includes a first region 202 and a second region 204. First region 202 is formed between a first inner periphery 206 and a first outer periphery 208, while second region 204 is formed between a second inner periphery 210 and a second outer periphery 212. Second inner periphery 210 is smaller than first inner periphery 206, and second outer periphery 212 is smaller than first outer periphery 208. In an embodiment of the present invention, second outer periphery 212 substantially overlaps first inner periphery 206.

First region 202 is capable of storing information, and includes one or more first tracks (not shown in FIG. 2) capable of tracking a light beam. The first tracks have a first set of undulations formed thereon.

Second region 204 includes one or more second tracks (not shown in FIG. 2) capable of tracking a light beam. The second tracks are formed up to a pre-defined periphery 214 from second outer periphery 212. Pre-defined periphery 214 substantially lies between second inner periphery 210 and second outer periphery 212, as shown in FIG. 2. The second tracks have a second set of undulations formed thereon.

With reference to FIG. 2, first inner periphery 206, first outer periphery 208, second inner periphery 210, second outer periphery 212 and pre-defined periphery 214 are circular in shape, and are in the form of concentric circles. Pre-defined periphery 214 is a pre-defined radial distance away from second outer periphery 212, shown as a radial distance 216 in FIG. 2. The pre-defined radial distance may be selected appropriately, as required.

The base substrate appears substantially visually undifferentiated across a region spanning up to pre-defined periphery 214 from first outer periphery 208, as shown in FIG. 2. Consider, for example, that storing medium 200 is an optical disc. In such a case, the base substrate has substantially similar intensity of whiteness across the region spanning up to pre-defined periphery 214 from first outer periphery 208.

The print substrate is attached to the base substrate. A label printed onto the print substrate appears substantially visually undifferentiated across first region 202 and second region 204, due to formation of the first tracks and the second tracks up to pre-defined periphery 214 from first outer periphery 208. The print substrate may, for example, be made of paper, plastic, PVP, PVOH, PVA, polymers, synthetic resins, or combinations thereof.

It should be noted here that the base substrate appears substantially visually undifferentiated when seen through a naked eye or an optical device. This holds true even when one or more labels are printed onto the print substrate.

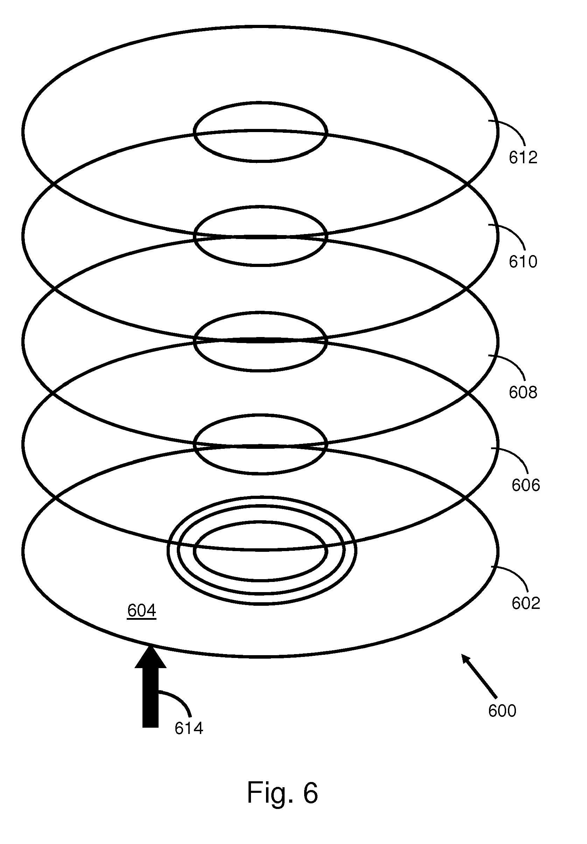

In addition, the base substrate may include one or more information-storing layers 606 (shown in FIG. 6) formed over the first tracks and the second tracks, a shiny coat 608 (shown in FIG. 6) coated over information-storing layers 606, and a protecting coat 610 (shown in FIG. 6) coated over shiny coat 608. Information-storing layers 606 enable storing of information on storing medium 200. Information-storing layers 606 may, for example, be made of cyanine, phthalocyanine, azo compounds, formazan, metals, metal-containing compounds, or combinations thereof. Shiny coat 608 shines off a light beam falling on storing medium 200, and therefore, aids in tracking of the light beam. Shiny coat 608 may, for example, be made of metals, such as silver and gold, metallic alloys, such as silver alloys and gold alloys, metal-containing compounds, or combinations thereof. Protecting coat 610 protects storing medium 200 from external factors, such as scratches or dirt. Protecting coat 610 may, for example, be made of a lacquer or a resin.

Storing medium 200 may be of any desired type, shape and size. Examples of storing medium 200 include, but are not limited to, CDs, DVDs, HD-DVDs, HVDs, BDs, MDs, UMDs, and LDs. Storing medium 200 may, for example, be recordable, re-writable, read-only memory, or random access memory. Accordingly, first inner periphery 206, first outer periphery 208, second inner periphery 210, second outer periphery 212 and pre-defined periphery 214 may be of any desired shape and size. For example, first inner periphery 206, first outer periphery 208, second inner periphery 210, second outer periphery 212 and pre-defined periphery 214 may each have different shapes, as opposed to the same circular shape shown in FIG. 2.

The first tracks and the second tracks may, for example, be in the form of a continuous spiral track. An optical drive may be used to read and/or write information from and/or onto storing medium 200. The optical drive may, for example, include a light source for generating a light beam, a light guide for guiding the light beam on the spiral track, and a light detector for detecting the reflection of the light beam off storing medium 200. Alternatively, the first tracks and the second tracks may be in the form of a plurality of concentric tracks. Accordingly, the light guide may be adapted to guide the light beam on the concentric tracks.

In accordance with an embodiment of the present invention, the first tracks are substantially similar to the second tracks. In such a case, the second tracks in second region 204 are a continuation of the first tracks in first region 202.

In accordance with an embodiment of the present invention, the first set of undulations is substantially similar to the second set of undulations. In such a case, the first set of undulations and the second set of modulations are modulated by the same modulation technique. In accordance with another embodiment of the present invention, the first set of undulations is different from the second set of undulations. In such a case, the first set of undulations and the second set of modulations are modulated by different modulation techniques. Examples of modulation techniques are, but not limited to, a QPSK modulation, a frequency modulation, an amplitude modulation, an MAM, a phase modulation, an MSK modulation, and an STW modulation.

FIG. 2 is merely an example, which should not unduly limit the scope of the claims herein. It is to be understood that the specific designation for storing medium 200 is for the convenience of reading and is not to be construed as limiting storing medium 200 to specific numbers, shapes, sizes, or arrangements of regions, or specific types of storing medium 200. One of ordinary skill in the art would recognize many variations, alternatives, and modifications of embodiments of the present invention. For example, second region 204 may be larger than first region 202, and may be arranged surrounding first region 202. In another example, the base substrate of storing medium 200 may be divided into a plurality of regions. At least two regions from the plurality of regions include one or more tracks capable of tracking a light beam, wherein the tracks have a set of undulations formed thereon. In such a case, the base substrate would appear substantially visually undifferentiated across the at least two regions. In addition, a label printed onto the print substrate of storing medium would also appear substantially visually undifferentiated across the at least two regions, due to formation of the tracks.

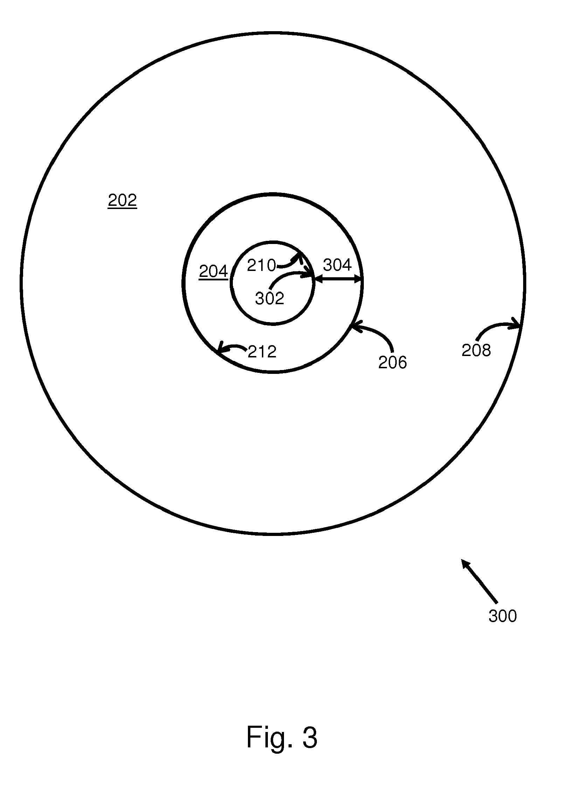

FIG. 3 illustrates a storing medium 300, in accordance with another embodiment of the present invention. With reference to FIG. 3, the second tracks are formed up to a pre-defined periphery 302 from second outer periphery 212 in second region 204. Pre-defined periphery 302 substantially lies at second inner periphery 210 and overlaps second inner periphery 210, as shown in FIG. 3.

With reference to FIG. 3, first inner periphery 206, first outer periphery 208, second inner periphery 210, second outer periphery 212 and pre-defined periphery 302 are circular in shape, and are in the form of concentric circles. Pre-defined periphery 302 is a pre-defined radial distance away from second outer periphery 212, shown as a radial distance 304 in FIG. 3.

As mentioned above, the base substrate appears substantially visually undifferentiated across a region spanning up to pre-defined periphery 302 from first outer periphery 208, that is, the entirety of first region 202 and second region 204, as shown in FIG. 3. Consider, for example, that storing medium 300 is an optical disc. In such a case, the base substrate has substantially similar intensity of whiteness across the entirety of first region 202 and second region 204.

Storing medium 300 may be of any desired shape and size. Accordingly, first inner periphery 206, first outer periphery 208, second inner periphery 210, second outer periphery 212 and pre-defined periphery 302 may be of any desired shape and size. For example, first inner periphery 206, first outer periphery 208, second inner periphery 210, second outer periphery 212 and pre-defined periphery 302 may each have different shapes, as opposed to the same circular shape shown in FIG. 3.

FIG. 3 is merely an example, which should not unduly limit the scope of the claims herein. It is to be understood that the specific designation for storing medium 300 is for the convenience of reading and is not to be construed as limiting storing medium 300 to specific numbers, shapes, sizes, or arrangements of regions, or specific types of storing medium 300. One of ordinary skill in the art would recognize many variations, alternatives, and modifications of embodiments of the present invention.

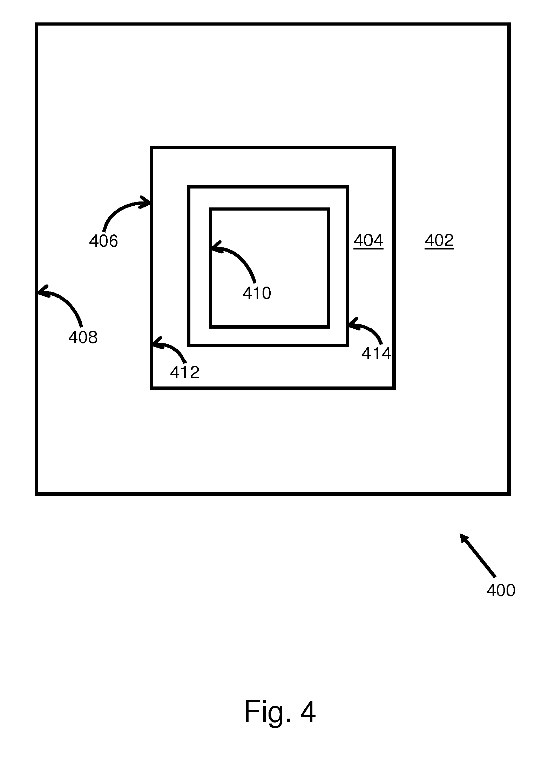

FIG. 4 illustrates a storing medium 400, in accordance with an embodiment of the present invention. With reference to FIG. 4, storing medium 400 is square in shape. Storing medium 400 includes a base substrate and a print substrate onto which one or more labels can be printed. The base substrate includes a first region 402 and a second region 404. First region 402 is formed between first inner periphery 406 and first outer periphery 408, while second region 404 is formed between second inner periphery 410 and second outer periphery 412. Second inner periphery 410 is smaller than first inner periphery 406, and second outer periphery 412 is smaller than first outer periphery 408. In an embodiment of the present invention, second outer periphery 412 substantially overlaps first inner periphery 406.

First region 402 is capable of storing information, and includes one or more first tracks (not shown in FIG. 4) capable of tracking a light beam. The first tracks have a first set of undulations formed thereon.

Second region 404 includes one or more second tracks (not shown in FIG. 4) capable of tracking a light beam. The second tracks are formed up to a pre-defined periphery 414 from second outer periphery 412. Pre-defined periphery 414 substantially lies between second inner periphery 410 and second outer periphery 412, as shown in FIG. 4. The second tracks have a second set of undulations formed thereon.

The base substrate appears substantially visually undifferentiated across a region spanning up to pre-defined periphery 414 from first outer periphery 408, as shown in FIG. 4. Consider, for example, that storing medium 400 is an optical disc. In such a case, the base substrate has substantially similar intensity of whiteness across the region spanning up to pre-defined periphery 414 from first outer periphery 408.

The print substrate is attached to the base substrate. A label printed onto the print substrate appears substantially visually undifferentiated across first region 402 and second region 404, due to formation of the first tracks and the second tracks up to pre-defined periphery 414 from first outer periphery 408. The print substrate may, for example, be made of paper, plastic, PVP, PVOH, PVA, polymers, synthetic resins, or combinations thereof.

It should be noted here that the base substrate appears substantially visually undifferentiated when seen through a naked eye or an optical device. This holds true even when one or more labels are printed onto the print substrate.

In addition, the base substrate may include one or more information-storing layers 606 (shown in FIG. 6) formed over the first tracks and the second tracks, a shiny coat 608 (shown in FIG. 6) coated over information-storing layers 606, and a protecting coat 610 (shown in FIG. 6) coated over shiny coat 608. Information-storing layers 606 enable storing of information on storing medium 400. Information-storing layers 606 may, for example, be made of cyanine, phthalocyanine, azo compounds, formazan, metals, metal-containing compounds, or combinations thereof. Shiny coat 608 shines off a light beam falling on storing medium 400, and therefore, aids in tracking of the light beam. Shiny coat 608 may, for example, be made of metals, such as silver and gold, metallic alloys, such as silver alloys and gold alloys, metal-containing compounds, or combinations thereof. Protecting coat 610 protects storing medium 400 from external factors, such as scratches or dirt. Protecting coat 610 may, for example, be made of a lacquer or a resin.

Storing medium 400 may be of any desired type, shape and size. Storing medium 400 may, for example, be recordable, re-writable, read-only memory, or random access memory. Accordingly, first inner periphery 406, first outer periphery 408, second inner periphery 410, second outer periphery 412 and pre-defined periphery 414 may be of any desired shape and size. With reference to FIG. 4, first inner periphery 406, first outer periphery 408, second inner periphery 410, second outer periphery 412 and pre-defined periphery 414 are square in shape. Alternatively, first inner periphery 406, first outer periphery 408, second inner periphery 410, second outer periphery 412 and pre-defined periphery 414 may each have different shapes, as opposed to the same square shape shown in FIG. 4.

The first tracks and the second tracks may, for example, be in the form of a continuous square-shaped track. An optical drive may be used to read and/or write information from and/or onto storing medium 400. The optical drive may, for example, include a light source for generating a light beam, a light guide adapted to guide the light beam on the square-shaped track, and a light detector for detecting the reflection of the light beam off storing medium 400. Alternatively, the first tracks and the second tracks may be in the form of a plurality of square tracks. Accordingly, the light guide may be adapted to guide the light beam on the square tracks.

In accordance with an embodiment of the present invention, the first tracks are substantially similar to the second tracks. In such a case, the second tracks in second region 404 are a continuation of the first tracks in first region 402.

In accordance with an embodiment of the present invention, the first set of undulations is substantially similar to the second set of undulations. In such a case, the first set of undulations and the second set of modulations are modulated by the same modulation technique. In accordance with another embodiment of the present invention, the first set of undulations is different from the second set of undulations. In such a case, the first set of undulations and the second set of modulations are modulated by different modulation techniques. Examples of modulation techniques are, but not limited to, a QPSK modulation, a frequency modulation, an amplitude modulation, an MAM, a phase modulation, an MSK modulation, and an STW modulation.

FIG. 4 is merely an example, which should not unduly limit the scope of the claims herein. It is to be understood that the specific designation for storing medium 400 is for the convenience of reading and is not to be construed as limiting storing medium 400 to specific numbers, shapes, sizes, or arrangements of regions, or specific types of storing medium 400. One of ordinary skill in the art would recognize many variations, alternatives, and modifications of embodiments of the present invention. For example, second region 404 may be larger than first region 402, and may be arranged surrounding first region 402.

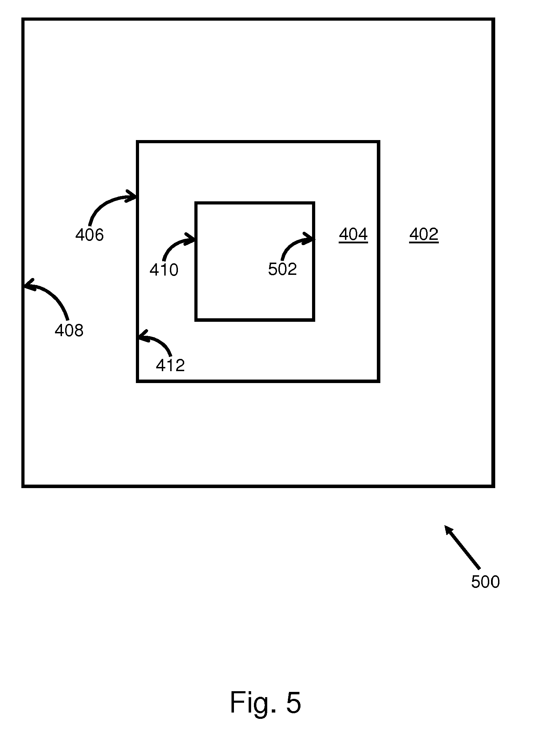

FIG. 5 illustrates a storing medium 500, in accordance with another embodiment of the present invention. With reference to FIG. 5, the second tracks are formed up to a pre-defined periphery 502 from second outer periphery 412 in second region 404. Pre-defined periphery 502 substantially lies at second inner periphery 410 and overlaps second inner periphery 410, as shown in FIG. 5.

With reference to FIG. 5, the base substrate appears substantially visually undifferentiated across a region spanning up to pre-defined periphery 502 from first outer periphery 408, that is, the entirety of first region 402 and second region 404, as shown in FIG. 5. Consider, for example, that storing medium 500 is an optical disc. In such a case, the base substrate has substantially similar intensity of whiteness across the entirety of first region 402 and second region 404.

Storing medium 500 may be of any desired shape and size. Accordingly, first inner periphery 406, first outer periphery 408, second inner periphery 410, second outer periphery 412 and pre-defined periphery 502 may be of any desired shape and size. With reference to FIG. 5, first inner periphery 406, first outer periphery 408, second inner periphery 410, second outer periphery 412 and pre-defined periphery 502 are square in shape. Alternatively, first inner periphery 406, first outer periphery 408, second inner periphery 410, second outer periphery 412 and pre-defined periphery 502 may each have different shapes, as opposed to the same square shape shown in FIG. 5.

FIG. 5 is merely an example, which should not unduly limit the scope of the claims herein. It is to be understood that the specific designation for storing medium 500 is for the convenience of reading and is not to be construed as limiting storing medium 500 to specific numbers, shapes, sizes, or arrangements of regions, or specific types of storing medium 500. One of ordinary skill in the art would recognize many variations, alternatives, and modifications of embodiments of the present invention.

FIG. 6 illustrates various layers of a storing medium 600, in accordance with an embodiment of the present invention. With reference to FIG. 6, storing medium 600 includes a base substrate 602 including a wobbled groove-containing surface 604, an information-storing layer 606 on wobbled groove-containing surface 604, a shiny coat 608 on information-storing layer 606, and a protecting coat 610 on shiny coat 608. A print substrate 612 is formed over protecting coat 610. A printed material may, for example, be printed on print substrate 612.

Wobbled groove-containing surface 604 includes grooves that are modulated to a predetermined frequency. Wobbled groove-containing surface 604, information-storing layer 606, shiny coat 608, protecting coat 610 and print substrate 612 are located over both a hub area and a data area of storing medium 600. The hub area contains no data and is located surrounding a central hole in storing medium 600.

The printed material appears substantially visually undifferentiated from the hub area to the data area of storing medium 600.

An arrow 614 represents the direction of a light beam falling on storing medium 600. The light beam shines off shiny coat 608, and is received by a light detector. This enables tracking of the light beam on storing medium 600.

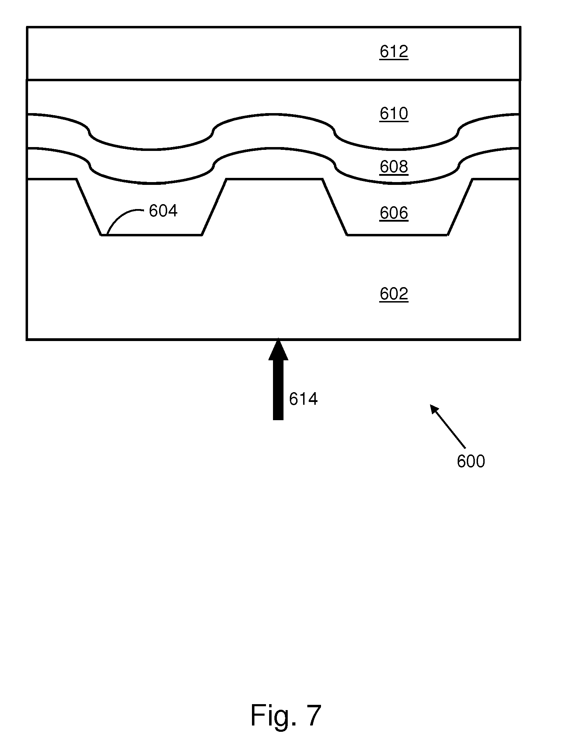

FIG. 7 is a sectional view illustrating the various layers of storing medium 600, in accordance with an embodiment of the present invention. FIG. 7 shows wobbled groove-containing surface 604 of base substrate 602. Information-storing layer 606 is formed on wobbled groove-containing surface 604, as shown. Shiny coat 608 is formed on information-storing layer 606, while protecting coat 610 is formed on shiny coat 608. Print substrate 612 is formed over protecting coat 610.

FIG. 6 and 7 are merely an example, which should not unduly limit the scope of the claims herein. It is to be understood that the specific designation for storing medium 600 is for the convenience of reading and is not to be construed as limiting storing medium 600 to specific numbers, shapes, sizes, types, or arrangements of various layers of storing medium 600. One of ordinary skill in the art would recognize many variations, alternatives, and modifications of embodiments of the present invention.

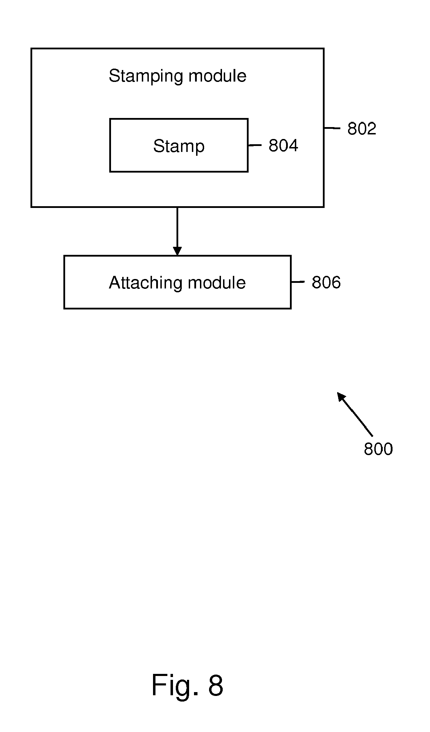

FIG. 8 illustrates a system 800 for manufacturing a storing medium, in accordance with an embodiment of the present invention. System 800 includes a stamping module 802 including a stamp 804, and an attaching module 806.

Stamping module 802 is adapted to stamp a base substrate. The base substrate includes a first region formed between a first inner periphery and a first outer periphery, and a second region formed between a second inner periphery and a second outer periphery. The second inner periphery is smaller than the first inner periphery, and the second outer periphery is smaller than the first outer periphery. The base substrate may, for example, be made of a polycarbonate or a plastic.

Stamp 804 is adapted to form one or more first tracks in the first region, and form one or more second tracks up to a pre-defined periphery from the second outer periphery in the second region. As mentioned above, the pre-defined periphery substantially lies at the second inner periphery or between the second inner periphery and the second outer periphery. The first tracks have a first set of undulations formed thereon, while the second tracks have a second set of undulations formed thereon.

The base substrate appears substantially visually undifferentiated across a region spanning up to the pre-defined periphery from the first outer periphery.

Stamp 804 may, for example, be an injection mold adapted to stamp a base substrate with a plurality of regions, and form tracks thereon. In order to manufacture storing media of different shapes and/or sizes, separate stamps are required to be designed. For example, two separate stamps are required to manufacture storing medium 200 and storing medium 300, as storing medium 200 and storing medium 300 have different pre-defined peripheries, namely pre-defined periphery 214 and pre-defined periphery 302. In another example, two separate stamps are required for manufacturing storing medium 300 and storing medium 500, as storing medium 300 and storing medium 500 have different shapes.

Attaching module 806 is adapted to attach a print substrate to the base substrate. The print substrate may, for example, be made of paper, plastic, PVP, PVOH, PVA, polymers, synthetic resins, or combinations thereof. A label printed onto the print substrate appears substantially visually undifferentiated across the first region and the second region, due to formation of the first tracks and the second tracks up to the pre-defined periphery from the first outer periphery.

Attaching module 806 may, for example, be a layer-forming module that forms a thin layer of a printable material over the base substrate. Alternatively, attaching module 806 may be a bonding module that bonds the print substrate with the base substrate with the use of an adhesive.

In addition, system 800 may also include a layering module for forming one or more information-storing layers over the first tracks and the second tracks, a shine-coating module for coating a shiny coat over the information-storing layers, and a protection-coating module for coating a protecting coat over the shiny coat.

The number of information-storing layers may, for example, depend on the type of a storing medium to be manufactured. As mentioned above, the information-storing layers may, for example, be made of cyanine, phthalocyanine, azo compounds, formazan, metals, metal containing compounds, or combinations thereof.

The shine-coating module may, for example, perform sputtering over the information-storing layers to form a thin coat of a shiny material. The shiny material may, for example, be a metal, a metallic alloy, a metal-containing compound, or a combination thereof.

The protection-coating module may, for example, perform spin coating to form the protecting coat. The protecting coat may, for example, be made of a lacquer or a resin.

FIG. 8 is merely an example, which should not unduly limit the scope of the claims herein. One of ordinary skill in the art would recognize many variations, alternatives, and modifications of embodiments of the present invention. For example, stamping module 802 may include a plurality of stamps and a stamp-selecting module for selecting a suitable stamp, as per the manufacturing requirements.

Various embodiments of the present invention provide a system for manufacturing a storing medium. The system includes stamping means for stamping a base substrate. As mentioned above, the base substrate includes a first region formed between a first inner periphery and a first outer periphery, and a second region formed between a second inner periphery and a second outer periphery. The second inner periphery is smaller than the first inner periphery, and the second outer periphery is smaller than the first outer periphery.

The stamping means includes a stamp adapted to form one or more first tracks in the first region, and form one or more second tracks up to a pre-defined periphery from the second outer periphery in the second region. The pre-defined periphery substantially lies at the second inner periphery or between the second inner periphery and the second outer periphery. The first tracks have a first set of undulations formed thereon, and the second tracks have a second set of undulations formed thereon. The base substrate appears substantially visually undifferentiated across a region spanning up to the pre-defined periphery from the first outer periphery.

The system further includes attaching means for attaching a print substrate to the base substrate. A label printed onto the print substrate appears substantially visually undifferentiated across the first region and the second region, due to formation of the first tracks and the second tracks up to the pre-defined periphery from the first outer periphery.

An example of the stamping means is, but not limited to, stamping module 802. An example of the attaching means is, but not limited to, attaching module 806.

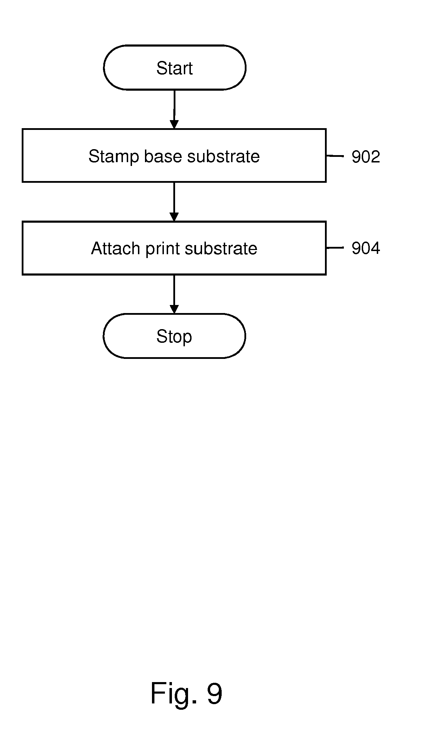

FIG. 9 illustrates a method of manufacturing a storing medium, in accordance with an embodiment of the present invention. The method is illustrated as a collection of steps in a logical flow diagram, which represents a sequence of steps that can be implemented in hardware, software, or a combination thereof.

At step 902, a base substrate is stamped. The base substrate so stamped includes a first region formed between a first inner periphery and a first outer periphery, and a second region formed between a second inner periphery and a second outer periphery. The second inner periphery is smaller than the first inner periphery, and the second outer periphery is smaller than the first outer periphery. The base substrate may, for example, be made of a polycarbonate or a plastic. In accordance with step 902, one or more first tracks are formed in the first region, while one or more second tracks are formed up to a pre-defined periphery from the second outer periphery in the second region. The pre-defined periphery substantially lies at the second inner periphery or between the second inner periphery and the second outer periphery. The first tracks have a first set of undulations formed thereon, while the second tracks have a second set of undulations formed thereon. The base substrate appears substantially visually undifferentiated across a region spanning up to the pre-defined periphery from the first outer periphery.

At step 904, a print substrate is attached to the base substrate. The print substrate may, for example, be made of paper, plastic, PVP, PVOH, PVA, polymers, synthetic resins, or combinations thereof. Step 904 may, for example, involve forming a thin layer of a printable material over the base substrate. Alternatively, step 904 may involve adhesive bonding the print substrate with the base substrate.

A label printed onto the print substrate appears substantially visually undifferentiated across the first region and the second region, due to formation of the first tracks and the second tracks up to the pre-defined periphery from the first outer periphery.

It should be noted here that steps 902-904 are only illustrative and other alternatives can also be provided where steps are added, one or more steps are removed, or one or more steps are provided in a different sequence without departing from the scope of the claims herein. For example, one or more of the following steps may be added: the step of forming one or more information-storing layers over the first tracks and the second tracks, the step of coating a shiny coat over the information-storing layers, and the step of coating a protecting coat over the shiny coat.

As described earlier, a region is visually undifferentiated when it has substantially the same intensity of whiteness across the region. In accordance with an embodiment of the present invention, the intensity of whiteness is measured in terms of the Lab color space, using a modified form of spectrophotometer. An example of such a spectrophotometer is the Gretag-Macbeth spectroscan.

The intensity of whiteness may be measured with reference to a reference surface, which is considered to be absolute white (i.e., having a value of component 'L' = 100). For example, the relative luminance of a test surface of a storing medium may be calculated by comparing the luminance of the test surface and the reference surface. The intensity of whiteness may then be calculated using the cube root of the relative luminance.

In one implementation, the spectroscan measures the intensity of whiteness at various points on a test surface of a storing medium to be tested. This ensures that the test surface has the same intensity of whiteness across a hub area and a data area of the storing medium. In another implementation, the spectroscan measures the intensity of whiteness at one or more points on a hub area of a storing medium to be tested.

**Table 1 is an exemplary table illustrating values of component 'L' measured across a plurality of storing media.**

| Storing media with differentiated visual aspect | Storing media with undifferentiated visual aspect |
|---|---|
| 82.1361 | 93.2324 |
| 83.7975 | 92.9352 |
| 82.4889 | 93.0396 |
| 83.7537 | 92.9093 |
| 83.3259 | 93.1912 |
| 82.6276 | 92.5427 |
| 83.7001 | 92.7766 |
| 82.3474 | 92.6329 |
| 83.4282 | 94.0206 |
| 82.6082 | 93.4651 |
| 82.8828 | 93.3023 |
| 83.0794 | 93.3608 |
| 82.7887 | 92.9652 |
| 82.0119 | 93.7360 |
| 83.4945 | 92.7625 |
| 83.3195 | 92.6862 |
| 84.1535 | 94.2648 |
| 81.9244 | 92.9507 |
| 83.0992 | 92.9366 |
| 82.9257 | 92.9134 |
| 82.5222 | 93.0791 |
| 82.0416 | 92.5212 |
| 82.5354 | 92.6431 |
| 82.2809 | 93.0864 |
| 82.2346 | 93.6384 |
| 83.5082 | 93.3692 |
| 82.6197 | 93.1760 |
| 82.3552 | 93.2809 |
| 83.0735 | 92.9533 |
| 83.1211 | 93.5576 |
| 82.1665 | 93.4058 |
| 83.6309 | 92.0324 |
| 82.5804 | 92.9886 |
| 82.7567 | 93.8536 |
| 83.4238 | 92.9324 |

| | |
|---|---|
| With reference to Table 1, Column 'Storing media with differentiated visual aspect' denotes values of component 'L' measured at a point on a hub area of 35 storing media with differentiated visual aspect. Column 'Storing media with undifferentiated visual aspect' denotes values of component 'L' measured at a point on a hub area of 35 storing media with undifferentiated visual aspect. The values of component 'L' have been performed based on the Lab color space. For each storing medium, the point on the hub area has been taken at a radius of 22 mm. | |

It can be observed that values of component 'L' fall in a range of 81 and 85 for hub areas of the storing media with differentiated visual aspect, while values of component 'L' fall in a range of 92 and 95 for hub areas of the storing media with undifferentiated visual aspect. Values of component 'L' fall in the same range of 92 and 95 for data areas of the storing media with undifferentiated visual aspect. Therefore, such storing media appear substantially visually undifferentiated across their hub areas and data areas.

Embodiments of the present invention provide a storing medium with undifferentiated visual aspect. The storing medium includes a base substrate and a print substrate. The base substrate includes a first region formed between a first inner periphery and a first outer periphery, and a second region formed between a second inner periphery and a second outer periphery. The second inner periphery is smaller than the first inner periphery, and the second outer periphery is smaller than the first outer periphery. One or more first tracks are formed in the first region, and one or more second tracks are formed up to a pre-defined periphery from the second outer periphery in the second region. The pre-defined periphery substantially lies at the second inner periphery or between the second inner periphery and the second outer periphery. The first tracks have a first set of undulations formed thereon, and the second tracks have a second set of undulations formed thereon. The base substrate appears substantially visually undifferentiated across a region spanning up to the pre-defined periphery from the first outer periphery.

In addition, one or more labels printed onto the print substrate of the storing medium appear substantially visually undifferentiated across the first region and the second region, due to formation of the first tracks and the second tracks up to the pre-defined periphery from the first outer periphery.

The above features provide an undifferentiated visual aspect to the storing medium, and make the storing medium visually appealing.

## Claims

1. A storing medium comprising:
a base substrate (602) comprising:
a first region (202) formed between a first inner periphery (206) and a first outer periphery (208), wherein the first region (202) is capable of storing information, the first region (202) comprises one or more first tracks capable of tracking a light beam, the first tracks have a first set of undulations formed thereon; and
a second region (204) formed between a second inner periphery (210) and a second outer periphery (212), wherein the second inner periphery (210) is smaller than the first inner periphery (206), and the second outer periphery (212) is smaller than the first outer periphery (208), the second region (204) comprises one or more second tracks capable of tracking a light beam, the second tracks are formed up to a pre-defined periphery (214) from the second outer periphery (212), the pre-defined periphery (214) substantially lies at the second inner periphery (210) or between the second inner periphery (210) and the second outer periphery (212), the second tracks have a second set of undulations formed thereon,
further wherein the base substrate (602) appears substantially visually undifferentiated across a region spanning up to the pre-defined periphery (214) from the first outer periphery (208); and
a print substrate (612) onto which one or more labels can be printed, the print substrate (612) being attached to the base substrate (602), wherein a label printed onto the print substrate (612) appears substantially visually undifferentiated across the first region (202) and the second region (204).

2. The storing medium of claim 1, wherein the first tracks are substantially similar to the second tracks.

3. The storing medium of claim 1, wherein the first set of undulations is substantially similar to the second set of undulations.

4. The storing medium of claim 1, wherein the first set of undulations is different from the second set of undulations.

5. The storing medium of claim 1, wherein the second outer periphery (212) substantially overlaps the first inner periphery (206).

6. A method of manufacturing a storing medium, the method comprising:
stamping a base substrate (602), the base substrate (602) comprising a first region (202) formed between a first inner periphery (206) and a first outer periphery (208), and a second region (204) formed between a second inner periphery (210) and a second outer periphery (212), wherein the second inner periphery (210) is smaller than the first inner periphery (206), and the second outer periphery (212) is smaller than the first outer periphery (208), the stamping comprises:
forming one or more first tracks in the first region (202), wherein the first tracks have a first set of undulations formed thereon; and
forming one or more second tracks in the second region (204) up to a pre-defined periphery (214) from the second outer periphery (212), wherein the pre-defined periphery (214) substantially lies at the second inner periphery (210) or between the second inner periphery (210) and the second outer periphery (212), the second tracks have a second set of undulations formed thereon,
further wherein the base substrate (602) appears substantially visually undifferentiated across a region spanning up to the pre-defined periphery (214) from the first outer periphery (208); and
attaching a print substrate (612) to the base substrate (602), wherein a label printed onto the print substrate (612) appears substantially visually undifferentiated across the first region (202) and the second region (204).

7. The method of claim 6, wherein the second tracks are formed substantially similar to the first tracks.

8. The method of claim 6, wherein the first set of undulations is substantially similar to the second set of undulations.

9. The method of claim 6, wherein the first set of undulations is different from the second set of undulations.

10. The method of claim 6, wherein the second outer periphery (212) substantially overlaps the first inner periphery (206).
